Europäisches Patentamt

European Patent Office

Office européen des brevets

(19)

(11) Publication number: **0 089 424**

**A1**

(12)

# EUROPEAN PATENT APPLICATION

(21) Application number: 82301115.0

(22) Date of filing: 19.03.82

(51) Int. Cl.³: **G 01 T 7/02**

(43) Date of publication of application:
28.09.83 Bulletin 83/39

(84) Designated Contracting States:
AT BE CH DE FR IT LI LU NL SE

(71) Applicant: **CANCER RESEARCH CAMPAIGN**
2 Carlton House Terrace
London SW1Y 5AR(GB)

(72) Inventor: **Margison, Geoffrey Paul**
15 Headlands Road
Bramhill Cheshire SK7 3AN(GB)

(74) Representative: **Evans, David Charles et al,**
F.J. CLEVELAND & COMPANY 40-43, Chancery Lane
London, WC2A 1JQ(GB)

(54) Improvements in and relating to a scintillation counting method and an evaporator for use therewith.

(57) Improvements to a scintillation counting method and an evaporator for use therewith is disclosed, which comprises radioactively tagging a sample for assay, subjecting the same to liquid chromatography, and subjecting the fraction so collected to scintillation counting characterised in that the chromatographic fractions are evaporated to dryness and subsequently taken up in a scintillation fluid prior to counting. The fraction may thus have a volume larger than the volumn of the scintillation fluid in which it is mixed

In a preferred embodiment of the invention an evaporator box is disclosed which provides means for directing a drying gas at a controlled temperature on the fraction in order to evaporate the same.

EP 0 089 424 A1

./...

Croydon Printing Company Ltd.

DESCRIPTION

The present invention relates to a method of analysing a sample by scintillation counting and to an evaporator for use therein.

Scintillation counting is a well known analytical method for counting the numbers of radioactive particles in a given volume of fluid. It is used inter alia for the measurement of the levels and persistence of binding of radioactive alkylating carcinogens to nucleic acids in target and non-target tissues. The usual analytical method involves liquid chromatography of enzymic or acidic hydrolysates of extracted DNA or RNA (in order to separate the normal bases from the alkylates bases of interest), and scintillation counting the fractions so collected. In such scintillation counting exercises, a high counting efficiency is an advantage because it reduces the original amount of radioactive material required. In the present instance radioactive carcinogens are particularly expensive and it is desirable to reduce the amount needed for confident measurement of binding. However, the small fraction volumes produced by the liquid chromatography have a low detection sensitivity and hence it is desirable to increase the sensitivity of said system while not increasing the amount of radioactive material originally employed.

According to the present invention, there is provided a method of analysing a sample by scintillation counting which comprises radioactively tagging a sample for assay, subjecting the same to liquid chromatography, and subjecting the fractions so collected to scintillation counting;

characterised in that the chromatographic fractions are evaporated to dryness and subsequently taken up in a scintillation fluid prior to counting. The fraction may have a volume considerably greater than the volume of the scintillation fluid in which the evaporate is taken up. This has the effect of concentrating the radioactive countable material while still giving low backgrounds (20 $\pm$ 1cm) and high efficiencies of the order of 80 to 85% (for $\left[ ^{14}c \right]$ ).

In order to evaporate the liquid chromatographic fractions it has been found desirable to direct a steam of air thereonto at a controlled temperature, for example 70$^{o}$C.

Finally in another aspect of the invention there is provided an evaporator adapted for use in the foregoing method which comprises a fan mounted on a casing, a plurality of heating elements disposed downstream of said fan, and a plurality of spaced jets each adapted to direct a drying gas at a controlled temperature onto a fraction to be evaporated. Usually the drying gas is air and an air filter is mounted on the fan to ensure that extraneous matter does not impinge upon the sample before counting.

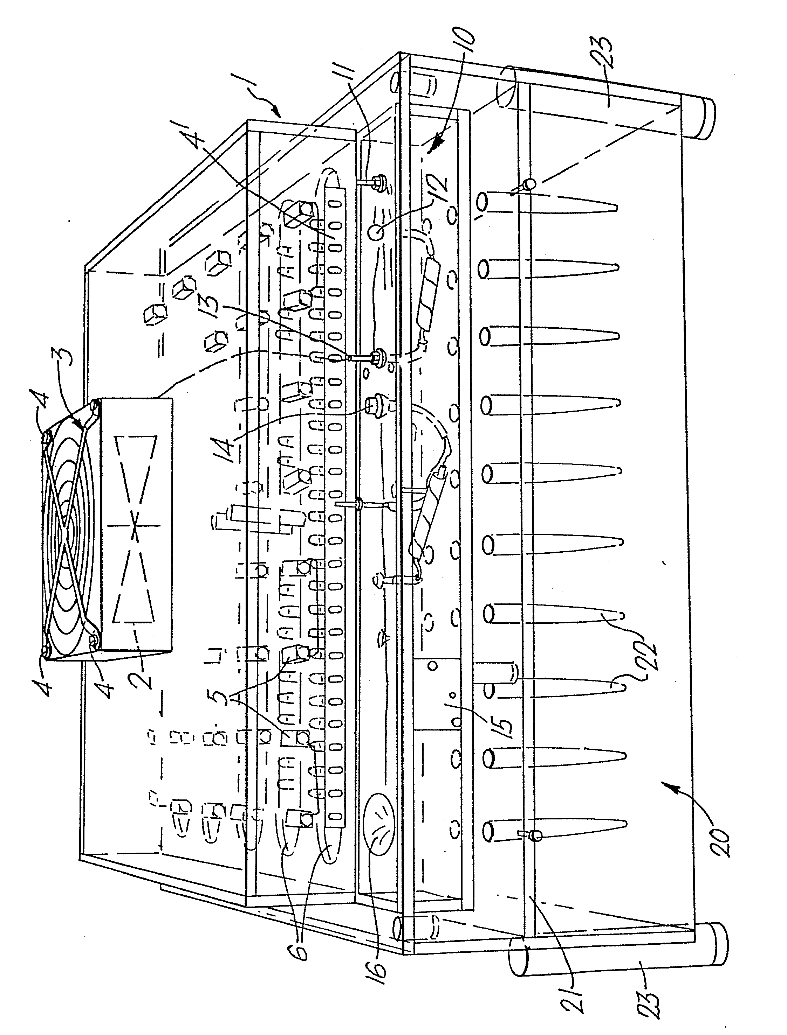

One aspect of the invention will now be described by way of illustration only with reference to Figures 1 and 2 of the accompanying drawings wherein Figure 1 represents a plan elevation of an evaporator in accord with the invention constructed mainly of perspex.

In this construction a fan motor box 1 is formed of a rectangular construction bearing on its upper planar face a fan guard 3 enclosing a fan 2. The fan guard 3 is attached to the mid point of the planar surface of the fan motor box 1 by means of four equally spaced screws which hold the fan guard and the fan firmly onto the box 1. The lower planar surface of the box 1 contains a plurality of circular apertures 6 which allow air drawn in through the fan guard 3 to pass from the motor box 1. Positioned intermediate between the top and bottom planar surfaces are six 28 - way tag strips 4 disposed in regular parallel spaced array. Heating elements 5 are disposed on said tag strips 4 and are constituted by 30; 15r 7w resistors as shown. Tag strips 4 also carry substantially coaxially with the fan 2, a thermal control switch 7 adapted in this instance to adjust the air temperature to 70°C.

Disposed exterior to and slightly below the fan motor box 1 is a control box 10 comprising from left to right a main socket 16, a micro switch 15 and amber neon (heater) indicator 14, a heater switch 13, a red neon (fan) indicator 12 and a fan switch 11.

The function of these elements will be apparent from the circuit diagram of Figure 2. The fan motor box 1 and the control box 2 are located on a base 20 of substantially rectangular configuration. The base 20 bears intermediate its height a substantially planar jet panel 21 bearing therein a plurality of jets 22 which are constituted by Gilson 1/ml auto-dispenser tips, the tips of the jets being downwardly disposed. The base 20 comprises adjacent each corner thereof feet 23, which may be adjustable if desired. An air filter may be incorporated in the device either adjacent the fan guard or any other convenient situation.

In use samples from the liquid chromatography process are situated adjacent the jets 22 and the fan motor is engaged; the heaters optionally being employed. Air passes through the fan guard 3 and into the fan motor box 1, the apertures 6 and into the space between the apertures 6 and the jet panel 21 and from there down each individual jet to the particular sample of the fraction to be evaporated to dryness. Hot air is continuely circulated through the jets until the samples are evaporated either to the desired concentration, or to dryness, as desired.

In the measurement of the levels and persistence of binding radioactive alkylating carcinogens to nucleic acids in target and non-target tissues referred to above, comparatively larger fractions of up to 20ml are collected and these are evaporated in the evaporator described above. The samples are then taken up in a small volume of water and counted with 5ml or 2.5 ml scintillation fluid. Low backgrounds of (20 ± 1cm) and higher efficiencies approaching 85% are achieved. Where rechromatography of samples is necessary the dried fractions can be counted in an anydrous scintillation cocktail (for example methonal/toluene) and recovered by extraction with water.

After use the evaporator of the invention can be readily taken apart for maintenance and the heater deck particularly is removable so that jet tips can be cleaned. The device for the present invention is particularly suitable for non-volatile radioactive materials; it is not, of course, suitable for volatile materials.

The invention relates, therefore, to the evaporator as hereinbefore described and to a method of scintillation counting utilising said evaporator. It also includes a sample when prepared by the method of the invention when utilising the evaporator.

0089424

CLAIMS

1.    A method of analysing a sample by scintillation counting which comprises radioactively tagging a sample for assay, subjecting the same to liquid chromatography and subjecting the fractions so collected to scintillation counting,

      characterised in that the chromatographic fractions are evaporated to dryness and subsequently taken up in a scintillation fluid prior to counting.

2.    A method according to claim 1 wherein said fraction has a volume too large to be mixed with the scintillation fluid.

3.    A method according to either of the preceding claims wherein the evaporation is effected by directing a stream of air onto said fractions at a controlled temperature.

4.    A method according to any one of the preceding claims wherein the radioactive tagged sample is dissolved or suspended in a volatile liquid.

5.    An evaporator adapted for use in any one of claims 1 to 4 comprising a fan mounted on a casing, a plurality of heating elements disposed downstream of said fan, and a plurality of spaced jets each adapted to direct a drying gas at a controlled temperature onto a fraction to be evaporated.

6. An evaporator according to claim 5 wherein the drying gas is air and an air filter is employed.

7. An evaporator as hereinbefore set forth with reference to the accompanying drawings.

8. A method according to claim 1 and substantially as hereinbefore set forth.

CLAIMS:

1.     An evaporator for use in sample analysis,
comprising a cabinet including a radiant heating means, means
for impelling a drying gas over said radiant heating means,
and means for positioning a plurality of samples to be dried by
said so heated gas,

characterized in that the heated impelled gas is generally
downwardly directed, individually onto each sample.

2.     An evaporator according to claim 1 wherein the means
for positioning the plurality of samples are a plurality of
downwardly directed jets each adapted to loosely fit within a
sample test tube to direct heated gas thereinto.

3.     An evaporator according to either of the foregoing claims,
wherein the drying gas is air at a predetermined temperature.

4.     An evaporator according to any preceding claim, wherein
the cabinet is formed at least partially of a clear material
whereby the evaporation of the samples can be readily monitored.

5. A method of analysing a sample by scintilation counting which
comprises utilizing an evaporator according to any preceding
claim.

0089424

European Patent
Office

**EUROPEAN SEARCH REPORT**

0089424

Application number

EP 82 30 1115

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | ISOTOPES AND RADIATION TECHNOLOGY, vol.6, no.4, 1969, Oak Ridge (US) F.L. SNYDER:"A review of instrumentation and procedures for 14C and 3H radioassay by thin-layer and gas-liquid chromatography", pages 381-400 * page 381, right-hand column:"Thin-layer chromatography - page 382; pages 383-385, the whole section on:"Strip scanning"; pages 386-387 the whole section on:"Zone analysis: Area scraping and zonal profile scans"; figures 1,3,4,6,10,11 * --- | 1,8 | G 01 T 7/02 |
| Y | US-A-3 139 370 (CHRISTIANSON & MAGGIO) * column 1, lines 14-24; column 2, line 29 - column 3, line 61; column 4, lines 33-43; figures 1-4 * --- | 1,3,5-8 | |
| | | | TECHNICAL FIELDS SEARCHED (Int. Cl. ³) G 01 T |
| A | TECHNICAL BULLETIN, no.7B, Nuclear-chicago corp., 1961, (US) N.S. RADIN:"How to prepare radio-active samples for counting on planchets", pages 1-4 * page 1, "Radioactive suspensions"; page 1, "Plating by drying a slurry"; page 4,B "Preventing cracking on the radioactive deposit" * ----- | 1,4,8 | |

The present search report has been drawn up for all claims

| Place of search THE HAGUE | Date of completion of the search 11-06-1982 | Examiner DATTA S. |
|---|---|---|